# DEMANDE DE BREVET EUROPEEN

(11) **EP 4 066 631 A1**
(43) Date de publication de la demande: **05.10.2022**
(21) Numéro de dépôt: 21166768.8
(22) Date de dépôt: 01.04.2021
(51) Int. Cl.: A01K 15/00, A61D 7/00

(54) **BOUCLE NASALE POUR RUMINANTS**

(71) Demandeur: Ceva Santé Animale, 33500 Libourne (FR)
(72) Inventeur: Guimberteau, Florence, 33500 Libourne (FR); Lacoste, Sandrine, 33500 Libourne (FR); Timsit, Edouard, 33500 Libourne (FR)
(74) Mandataire: Plasseraud IP

(57) **Abrégé**

La présente invention concerne une boucle nasale pour ruminants, tels que des bovins, comprenant un corps de boucle (1) comportant une partie extra-nasale (2) et des parties intra-nasales (3) s'étendant de part et d'autre de cette partie extra-nasale (2), chacune de ces parties intra-nasales (3) portant une plaquette (4, 5) destinée à venir en appui contre la cloison nasale séparant les cavités nasales d'un ruminant, lesdites plaquettes (4, 5) d'appui étant ainsi placées aux extrémités de ladite boucle nasale. Selon l'invention, chaque plaquette d'appui a une forme allongée et comporte des extrémités opposées dont au moins une est plus large que sa région centrale placée entre lesdites deux extrémités, chaque plaquette étant convexe et présentant une face avant destinée à venir en contact avec la paroi nasale de l'animal dont la surface est au moins égale à 500 mm² et encore mieux au moins égale à 1500 mm², et de manière encore plus préférentielle au moins égale à 2000 mm², chaque plaquette d'appui étant ainsi apte à maximiser la surface de contact avec la cloison nasale pour des morphologies différentes de naseaux pour assurer le maintien de cette boucle sans blesser l'animal.

## Description

### Domaine technique

La présente invention concerne une boucle nasale pour ruminants tels que des bovins.

### Technique antérieure

Il est connu de fixer un dispositif ayant la forme d'un anneau ou d'une boucle dans ou sur la cloison nasale d'un bovin pour l'application de substances notamment de produits vétérinaires, ou encore pour surveiller à distance l'animal.

De manière avantageuse, une boucle nasale est mise en place par simple pincement de la cloison nasale du bovin au moyen des parties terminales de la boucle.

Ces parties terminales sont typiquement des renflements en forme de boule ou encore des têtes ayant une forme de disque.

Toutefois, force est de constater que ces parties terminales n'ont généralement pas été pensées pour tenir compte de la morphologie du nez des bovins, plus particulièrement de l'aspect conique de l'entrée des naseaux.

On observe alors l'apparition de lésions causées aux muqueuses nasales par les parties terminales de la boucle, ces muqueuses étant fragiles et très vascularisées et les contraintes appliquées par ces parties terminales, élevées (surtout en partie crâniale, en raison de l'aspect conique du nez).

Par ailleurs, une telle boucle qui est placée au centre du mufle ou sur la lèvre supérieure de l'animal, empêche un nettoyage satisfaisant du mufle.

Or, il est connu que cette zone glabre de l'animal qui est essentielle, requiert un entretien régulier pour garantir une hygiène élevée.

D'autre part, cette boucle nasale est susceptible également d'entrer en contact avec l'alimentation de l'animal, constituant dès lors une source potentielle de contamination.

Il est également difficile pour l'animal d'utiliser son mufle pour actionner un abreuvoir à palette et boire convenablement lorsqu'une boucle nasale est placée au centre de son mufle ou sur sa lèvre supérieure.

En outre, il est connu que le corps d'une boucle nasale peut présenter une section transversale de forme elliptique, circulaire ou encore rectangulaire.

On constate que de telles boucles sont généralement amples.

Or, le mufle et ses naseaux constituent des éléments essentiels de la perception sensorielle et tactile des bovins et dès lors sont abondamment mis en œuvre notamment pour explorer ou agir sur l'environnement extérieur.

Ces boucles sont alors susceptibles de venir s'accrocher à un élément externe et être arrachées brusquement des naseaux de l'animal.

De nouveau, dans de tels cas, des lésions peuvent être observées, lesquelles constituent des portes d'entrée pour de nombreux agents pathogènes.

Il existe donc un besoin pressant pour une boucle nasale pour ruminants, dont la conception originale permette de surmonter les inconvénients de l'art antérieur exposés ci-dessus.

### Objet de l'invention

La présente invention vise à pallier les inconvénients de l'art antérieur en proposant une boucle nasale, simple dans sa conception et dans son mode opératoire, assurant un maintien ferme de celle-ci tout en diminuant sensiblement le risque de blessure de l'animal.

Un autre objet de la présente invention est une telle boucle nasale dont le risque d'arrachement indésirable est limité.

Encore un objet de la présente invention est une telle boucle autorisant un ruminant à s'alimenter et à s'abreuver sans difficulté.

Encore un autre objet de la présente invention est une telle boucle nasale permettant un nettoyage plus aisé du mufle de l'animal avec sa langue.

Encore un autre objet de la présente invention est une telle boucle nasale permettant la libération d'au moins une substance telle qu'un produit vétérinaire, ou encore une substance non thérapeutique, dans les naseaux du ruminant.

### Exposé de l'invention

A cet effet, l'invention concerne une boucle nasale pour ruminants, tels que des bovins, des ovins ou encore des caprins, comprenant un corps de boucle comportant une partie extra-nasale et des parties intra-nasales s'étendant de part et d'autre de cette partie extra-nasale, chacune de ces parties intra-nasales portant une plaquette destinée à venir en appui contre la cloison nasale séparant les cavités nasales d'un ruminant, lesdites plaquettes d'appui étant ainsi placées aux extrémités de ladite boucle nasale. Selon l'invention,
- chaque plaquette d'appui a une forme allongée et comporte des extrémités opposées dont au moins une est plus large que sa région centrale placée entre lesdites deux extrémités,
- chaque plaquette étant convexe et présentant une face avant destinée à venir en contact avec la paroi nasale de l'animal dont la surface est au moins égale à 500 mm², de manière préférentielle au moins égale à 750 mm², et encore mieux au moins égale à 1500 mm², et de manière encore plus préférentielle au moins égale à 2000 mm², chaque plaquette d'appui étant ainsi apte à maximiser la surface de contact avec la cloison nasale pour des morphologies différentes de naseaux de manière à assurer le maintien de cette boucle sans blesser l'animal.

De manière avantageuse, la conception originale de cette boucle nasale assure un maintien ferme de celle-ci sur la cloison nasale, encore appelée septum nasal, du ruminant tout en contraignant localement le moins possible cette dernière.

Ce but est atteint avec une surface de contact de chaque plaquette avec la cloison nasale qui est maximisée, la face avant de chaque plaquette épousant la forme de la cloison nasale, ce qui permet de diminuer les contraintes en répartissant la force exercée par le pincement sur une plus grande surface.

La forme convexe de la plaquette permet de garantir une surface de contact maximale avec la paroi nasale.

En outre, et de manière avantageuse, les bords de la plaquette sont arrondis en ne présentant aucun angle saillant susceptible de blesser l'animal.

Des tests ont montré avantageusement un risque sensiblement diminué de lésion de la muqueuse nasale lorsque le ruminant porte cette boucle nasale.

De manière avantageuse, le corps de boucle est réalisé dans un matériau élastiquement déformable.

A titre purement illustratif, ce corps de boucle est réalisé dans un polymère injectable tel qu'un polypropylène (PP), un polyéthylène (PE) ou un polyamide (PA).

Selon un mode de réalisation de la présente invention, ces plaquettes sont avantageusement amovibles.
Ces plaquettes étant fonctionnalisées, elles peuvent ainsi être aisément changées par l'opérateur pour présenter des fonctions diverses.
A titre d'exemple, ces plaquettes peuvent être configurées pour libérer de manière prolongée des substances telles que des hormones, dans les naseaux de l'animal, ou encore être configurées pour surveiller à distances des paramètres de l'animal tels que sa température, son rythme cardiaque, ....
Dans ce dernier cas, chaque plaquette comporte un logement permettant d'intégrer au moins un tel capteur, ce dernier étant affleurant ou non avec la face avant de cette plaquette.
La boucle nasale peut comporter avantageusement alors une unité centrale reliée à une antenne pour recueillir et communiquer ces données selon un protocole de communication sans fil.
Alternativement, l'opérateur peut encore mettre en œuvre des plaquettes non fonctionnalisées servant au seul maintien de la boucle nasale.
A titre purement illustratif, chaque plaquette peut être fixée en position de façon clipsable ou vissable sur l'extrémité libre de la partie intranasale correspondante.

Selon un autre mode de réalisation de cette boucle nasale pour ruminants, les plaquettes de ladite boucle nasale sont espacées l'une de l'autre d'une distance d, cette boucle nasale étant sans contrainte, ou encore dans sa configuration au repos, c'est-à-dire non écartée.
Cette distance d est avantageusement comprise entre un (1) et dix (10) mm. On s'assure ainsi de ne pas blesser l'animal.

Selon encore un autre mode de réalisation de cette boucle nasale pour ruminants, la portion centrale de la face avant correspondant à ladite zone centrale contient le sommet de ladite plaquette tandis que la portion centrale de la face arrière correspondant à ladite zone centrale est directement reliée à la partie intra-nasale correspondante.

De manière avantageuse, la plaquette étant convexe ou encore bombée, le sommet de cette plaquette est placé dans la région centrale de sa face avant tandis que la liaison de cette plaquette avec l'extrémité de la partie intra-nasale correspondante est réalisée dans la région centrale de sa face arrière.

Selon encore un autre mode de réalisation de cette boucle nasale pour ruminants, chaque plaquette a une forme générale de haricot (« kidney bean shape ») pour présenter un renfoncement destiné à recevoir, ou venir en prise avec, une saillie du plancher nasal du naseau correspondant de manière à assurer le positionnement de sa face avant au regard de ladite cloison nasale.
La plaquette est ainsi calée en position d'appui sur le plancher nasal de sorte à présenter sa face avant selon un angle de chasse prédéterminé pour épouser au mieux la paroi nasale.
En outre, l'appui de cette plaquette sur le plancher nasal permet d'exercer des contraintes moindres sur la paroi nasale et donc de limiter la sensation de gêne pour le ruminant.

Selon encore un autre mode de réalisation de cette boucle nasale pour ruminants, lesdites plaquettes d'appui sont différentes pour tenir compte des morphologies symétriques des deux narines du museau d'un ruminant.
Ces deux narines présentent en effet une symétrie miroir par rapport à un plan de symétrie passant par la cloison nasale. Ces plaquettes d'appui sont donc symétriques par rapport à un plan médian de la boucle nasale, ou encore par rapport à la cloison nasale, lorsque cette boucle est portée par l'animal.

Selon encore un autre mode de réalisation de cette boucle nasale pour ruminants, chaque plaquette présente un angle de dessus, encore appelé angle de chasse, de 140 +/- 5°.

Selon encore un autre mode de réalisation de cette boucle nasale pour ruminants, le corps de boucle comporte une portion médiane de recouvrement et des branches latérales incurvées, ladite portion médiane et lesdites branches latérales définissant un profil en forme de U aplati, ladite portion médiane étant destinée à recouvrir le museau de l'animal.
De manière avantageuse, le corps de boucle est ainsi déporté sur la portion haute du museau de l'animal pour dégager au maximum le mufle. Libéré de cette boucle, l'animal recouvre la possibilité de nettoyer cette zone avec sa langue pour une meilleure hygiène.
En outre, le ruminant a la possibilité d'actionner des objets avec son mufle sans ressentir de contrainte de sorte qu'il peut s'abreuver et s'alimenter plus aisément.

De préférence, la partie extra-nasale est symétrique par rapport à un plan passant par la cloison nasale.

De manière avantageuse, la portion médiane a une forme en U dont la base, ou en V dont la pointe, est dirigée à l'opposé du mufle de l'animal lorsque la boucle nasale est portée par le ruminant, pour dégager au maximum le mufle de l'animal.

Avantageusement, l'extrémité inférieure de la boucle nasale étant déterminée par une extrémité d'une ou des plaquettes d'appui et l'extrémité supérieure de ladite boucle nasale étant déterminée par des points des branches latérales du corps de boucle destinés à être placés hors des naseaux, la distance séparant les extrémités inférieure et supérieure de la boucle nasale est inférieure ou égale à 70 mm et encore mieux à 65 mm de sorte que la portion médiane soit proche de, ou est placée au plus près de, la surface extérieure du museau lorsque la boucle nasale est portée par un ruminant.
La boucle nasale de l'invention présente ainsi une moindre proportion à l'arrachement car elle est globalement plus proche du museau de l'animal.

Selon encore un autre mode de réalisation de cette boucle nasale pour ruminants, la distance séparant l'extrémité de la partie intra-nasale destinée à être placée au droit de, ou sensiblement au droit de, l'entrée du naseau correspondant, du centre de la plaquette portée par cette partie intra-nasale est égale à 45 +/- 10 mm.

Selon encore un autre mode de réalisation de cette boucle nasale pour ruminants, au moins une desdites plaquettes d'appui est configurée pour permettre la libération prolongée d'au moins une substance sur une période de temps.
Cette substance peut être un produit vétérinaire (antiparasitaire, anti-infectieux, ...), des hormones ou encore une substance non thérapeutique telle que des vitamines ou des phéromones.

De préférence, au moins la face avant de ladite ou de chaque plaquette d'appui est recouverte, ou ladite ou chaque plaquette est imprégnée, de ladite au moins une substance à administrer.

De manière avantageuse, ladite ou chaque plaquette d'appui est configurée de manière que le taux de distribution de ladite au moins une substance, est basé sur l'étendue de sa surface de contact avec la cloison nasale.

Cette substance peut être une composition comprenant :
- entre 35 et 55 % en poids d'une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200°C ; et
- entre 30 et 55 % en poids de progestérone, par rapport au poids total de la composition.

Alternativement, cette substance peut être une composition comprenant :
- une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200 °C ; et
- de la progestérone, dans laquelle le ratio en poids de la progestérone sur la matrice polymérique est compris entre 0,5 et 2, de préférence entre 0,54 et 1,57, et de manière encore plus préférée de 1 ou 1,28.

Encore de manière alternative, cette substance peut être une composition comprenant :
- une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200 °C ; et
- de la progestérone dans laquelle la masse surfacique de la progestérone dans la matrice polymérique est comprise entre 20 et 100 mg/cm², de préférence entre 25 et 80 mg/cm².

De manière avantageuse, on observe que ces compositions polymériques concentrées en progestérone délivrent des hormones de manière continue et prolongée dans le temps.

De préférence, ledit polymère thermoplastique est un polymère thermoplastique de type EVA ou un polymère thermoplastique élastomère (TPE).

Selon encore un autre mode de réalisation de cette boucle nasale pour ruminants, elle comporte un ou plusieurs éléments choisis dans le groupe comprenant un accéléromètre, un gyroscope, un capteur de température, un capteur de fréquence cardiaque, un capteur d'humidité, un radar, un dispositif de localisation de cette boucle à proximité d'un abreuvoir ou d'une mangeoire et des combinaisons de ces éléments.
Ces capteurs permettent avantageusement de recueillir à distance des informations sur le ruminant : position, activité, alimentation, abreuvement, état de santé.
Certains de ces capteurs tels que l'accéléromètre, le gyroscope ou encore le dispositif de localisation peuvent être intégrés dans, ou placés sur, le corps de boucle, par exemple dans sa partie extra-nasale.
D'autres tels que le capteur de fréquence cardiaque ou le capteur de température, sont destinés à être logés dans, ou placés sur, les plaquettes d'appui.

La présente invention concerne également un procédé de conception assistée par ordinateur d'une boucle nasale pour ruminants, le procédé comprenant au moins des étapes consistant à :
- obtenir une pluralité d'images d'au moins une partie du museau d'une pluralité de ruminants, ladite partie comprenant les naseaux ;
- pour chaque ruminant, créer un modèle virtuel en trois dimensions d'au moins une portion du museau à partir des images précédemment obtenues pour ce ruminant, ledit modèle virtuel intégrant les naseaux ;
- pour chaque ruminant et pour chacun des naseaux du ruminant considéré :
   * positionner un volume de plaquette d'appui virtuelle dans le naseau correspondant du modèle virtuel, et par rapport à au moins un repère anatomique de référence dudit naseau correspondant, de manière à définir au moins deux zones d'intersection entre le volume de ladite plaquette d'appui virtuelle et le naseau, lesdites au moins deux zones d'intersection définissant des plans de coupe nécessaires à la mise en position de la plaquette d'appui dans le naseau contre la cloison nasale et en appui sur le plancher nasal ;
   * détecter les contours desdites zones d'intersection ;
   * maximiser la surface de contact de la plaquette avec la cloison nasale ;
   * définir la plaquette correspondant au naseau et audit ruminant, cette plaquette ayant les contours préalablement détectés ; puis
- déterminer à partir de différentes plaquettes d'appui ainsi obtenues et pour chaque naseau, une plaquette d'appui dont la forme, les dimensions et l'angle de présentation de la plaquette dans le naseau maximisent la surface de contact de la plaquette d'appui avec la cloison nasale pour des morphologies différentes de naseaux sans blesser l'animal.

Un tel procédé de conception peut être mis en œuvre pour déterminer des plaquettes dites universelles d'une boucle nasale pour une race particulière, ou pour différentes races d'un même animal tel qu'un bovin, ovin ou autre.

Alternativement, il pourrait être mis en œuvre pour réaliser des plaquettes sur mesure pour un animal spécifique en prenant au moins deux images d'au moins une partie du museau de cet animal, cette partie du museau intégrant les naseaux, puis en créant un modèle virtuel en trois dimensions d'au moins une portion du museau de cet animal à partir des images précédemment obtenues, ledit modèle virtuel intégrant les naseaux.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

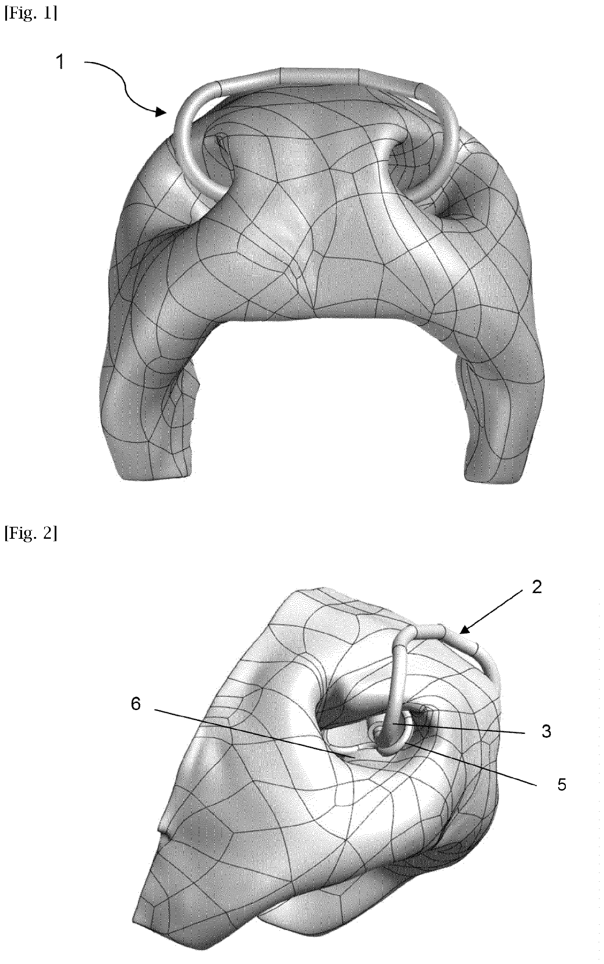

   [Fig. 1] est une représentation partielle et de face de l'extrémité du museau d'un bovin portant une boucle nasale selon un mode de réalisation particulier de la présente invention ;
**Fig. 2**
   [Fig. 2] est une représentation partielle et en perspective de l'extrémité du museau d'un bovin illustrée à la Fig. 1 ;
**Fig. 3**

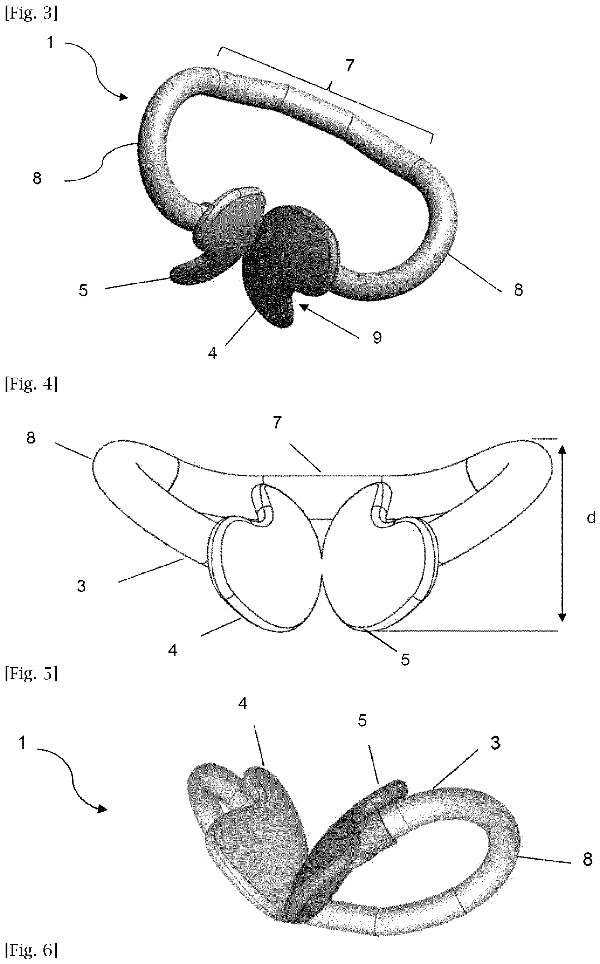

   [Fig. 3] est une première vue en perspective de la boucle nasale de la Fig. 1 ;
**Fig. 4**
   [Fig. 4] est une seconde vue de la boucle nasale de la Fig. 1 ;
**Fig. 5**
   [Fig. 5] est une troisième vue de la boucle nasale de la Fig. 1 ;
**Fig. 6**

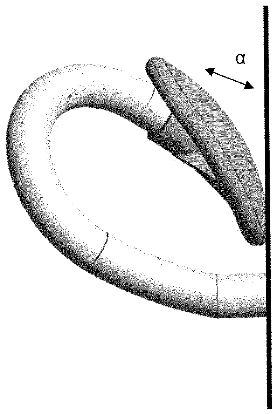

   [Fig. 6] montre l'angle de chasse formé par une plaquette de la boucle nasale de la Fig. 1;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 6 illustrent de manière schématique une boucle nasale pour bovin selon un mode de réalisation particulier de la présente invention.

Cette boucle nasale comporte un corps de boucle 1 réalisé dans un matériau flexible, élastiquement déformable tel qu'un polymère, lequel permet de varier la distance entre les extrémités terminales de la boucle.

Ce corps de boucle 1 comporte une partie extra-nasale 2 destinée à être placée à l'extérieur du museau du bovin et des parties intra-nasales 3 s'étendant de part et d'autre de cette partie extra-nasale 2 et dans le prolongement de cette dernière.

Des plaquettes 4, 5 destinées à venir en appui contre la cloison nasale séparant les naseaux du bovin, sont portées par les parties intra-nasales 3.

Ces deux plaquettes 4, 5 d'appui forment ainsi les extrémités terminales de la boucle nasale.

Lorsque ces plaquettes 4, 5 sont positionnées dans les naseaux de l'animal, elles exercent une légère pression sur la cloison nasale de ce dernier pour assurer le maintien en position de la boucle nasale.

Chaque plaquette d'appui 4, 5 présente une forme allongée et comporte des extrémités opposées dont une est plus large que sa région centrale placée entre ces deux extrémités. L'extrémité la plus large est ici destinée à être placée le plus à l'intérieur de la cavité nasale.

Chaque plaquette 4, 5 est de plus légèrement convexe, ou encore bombée, le sommet de cette plaquette étant placé dans la partie centrale de sa face avant destinée à venir en contact avec la cloison nasale du bovin. La face arrière de chaque plaquette 4, 5 est quant à elle reliée à l'extrémité de la partie intra-nasale correspondante.

La surface de la face avant de chaque plaquette 4, 5 est ici avantageusement d'au moins 2000 mm² pour un bovin, ici 3000 mm², pour assurer une répartition de la pression sur une plus grande surface de la cloison nasale.

Chaque plaquette 4, 5 a une forme générale de haricot et présente un renfoncement 9 destiné à recevoir, ou venir en prise avec, une saillie 6 naturelle du plancher nasal du naseau correspondant.

Ces plaquettes 4, 5 sont ainsi en appui à la fois contre le plancher nasal et contre la cloison nasale de leur naseau correspondant de sorte que la pression à appliquer sur cette cloison nasale pour assurer le maintien en position de la boucle nasale est moindre qu'avec les boucles de l'art antérieur.

Par ailleurs, cet appui de chaque plaquette 4, 5 sur deux zones d'intersection anatomiques que forment le plancher nasal et la cloison nasale, assure un positionnement stable de chaque plaquette d'appui.

Comme représenté sur la Fig. 6, chaque plaquette 4, 5 présentant un angle *α*, visualisable en vue de dessus, encore appelé angle de chasse, déterminé de 140°, la face avant de chaque plaquette épouse la paroi nasale. Une mobilité de chaque plaquette d'environ 45° autour de l'extrémité du support autorise un bon ajustement de l'angle de chasse à la muqueuse nasale.

De manière plus détaillée, le corps de boucle 1 comporte une portion médiane de recouvrement 7 et des branches latérales 8 incurvées, cette portion médiane 7 et ces branches latérales 8 définissant un profil en forme de U aplati.

Cette portion médiane 7 qui est destinée à recouvrir le museau de l'animal, présente de plus une forme en U dont la base est dirigée à l'opposé du mufle de l'animal lorsque cette boucle nasale est portée par le bovin.

Comme illustré sur les Fig. 1 et 2, le corps de la boucle nasale passe sur le dessus du museau du bovin et laisse libre le mufle de l'animal.

De manière avantageuse, la distance d séparant les extrémités inférieure et supérieure de la boucle nasale est ici égale à 65 mm de sorte que la portion médiane 7 soit placée au plus près de la surface extérieure du museau lorsque la boucle nasale est portée par le bovin.

Le risque d'accroche de la boucle nasale est ainsi grandement diminué.

De plus, la distance séparant l'extrémité de la partie intra-nasale 3 destinée à être placée au droit de, ou sensiblement au droit de, l'entrée du naseau correspondant, du centre de la plaquette 4, 5 portée par cette partie intra-nasale est égale ici à 45 mm.

Le corps de boucle présente ici une section droite ayant une forme circulaire et d'un diamètre de huit (8) mm. Alternativement, elle pourrait présenter une section de diamètre égale à six (6) ou dix (10) mm.

De manière avantageuse, il est constaté que la présente boucle nasale maximise le bien-être des bovins tout en réduisant de manière significative les risques d'apparition de lésions.

## Revendications

1. Boucle nasale pour ruminants, tels que des bovins, comprenant un corps de boucle (1) comportant une partie extra-nasale (2) et des parties intra-nasales (3) s'étendant de part et d'autre de cette partie extra-nasale (2), chacune de ces parties intra-nasales (3) portant une plaquette (4, 5) destinée à venir en appui contre la cloison nasale séparant les cavités nasales d'un ruminant, lesdites plaquettes (4, 5) d'appui étant ainsi placées aux extrémités de ladite boucle nasale, **caractérisée en ce que**
- chaque plaquette d'appui (4, 5) a une forme allongée et comporte des extrémités opposées dont au moins une est plus large que sa région centrale placée entre lesdites deux extrémités,
- chaque plaquette étant convexe et présentant une face avant destinée à venir en contact avec la paroi nasale de l'animal dont la surface est au moins égale à 500 mm², et encore mieux au moins égale à 1500 mm², et de manière encore plus préférentielle au moins égale à 2000 mm², chaque plaquette d'appui étant ainsi apte à maximiser la surface de contact avec la cloison nasale pour des morphologies différentes de naseaux pour assurer le maintien de cette boucle sans blesser l'animal.

2. Boucle nasale selon la revendication 1, **caractérisée en ce que** chaque plaquette (4, 5) a une forme générale de haricot pour présenter un renfoncement (9) destiné à recevoir une saillie (6) du plancher nasal du naseau correspondant de manière à assurer le positionnement de sa face avant au regard de ladite cloison nasale.

3. Boucle nasale selon la revendication 1 ou 2, **caractérisée en ce que** lesdites plaquettes (4, 5) d'appui sont différentes pour tenir compte des morphologies symétriques des deux narines du museau d'un ruminant.

4. Boucle nasale selon l'une quelconque des revendications 1 à 3, **caractérisée en ce que** chaque plaquette (4, 5) présente un angle de dessus, encore appelé angle de chasse, de 140° +/- 5°.

5. Boucle nasale selon l'une quelconque des revendications précédentes, **caractérisée en ce que** le corps de boucle (1) comporte une portion médiane de recouvrement (7) et des branches latérales (8) incurvées, ladite portion médiane et lesdites branches latérales définissant un profil en forme de U aplati, ladite portion médiane étant destinée à recouvrir le museau de l'animal.

6. Boucle nasale selon la revendication 6, **caractérisée en ce que** l'extrémité inférieure de la boucle nasale étant déterminée par une extrémité d'une ou des plaquettes (4, 5) d'appui et l'extrémité supérieure de ladite boucle nasale étant déterminée par des points des branches latérales du corps de boucle (1) destinés à être placés hors des naseaux, la distance séparant les extrémités inférieure et supérieure de la boucle nasale est inférieure ou égale à 70 mm et encore mieux à 65 mm de sorte que la portion médiane soit proche de la surface extérieure du museau lorsque la boucle nasale est portée par un ruminant.

7. Boucle nasale selon la revendication 6 ou 7, **caractérisée en ce que** la portion médiane (7) a une forme en U dont la base, ou en V dont la pointe, est dirigée à l'opposé du mufle de l'animal lorsque la boucle nasale est portée par le ruminant, pour dégager le mufle de l'animal.

8. Boucle nasale selon l'une quelconque des revendications précédentes, **caractérisée en ce que** la distance séparant l'extrémité de la partie intra-nasale (3) destinée à être placée au droit de, ou sensiblement au droit de, l'entrée du naseau correspondant, du centre de la plaquette (4, 5) portée par cette partie intra-nasale est égale à 45 +/-10 mm.

9. Boucle nasale selon l'une quelconque des revendications précédentes, **caractérisée en ce que** au moins une desdites plaquettes (4, 5) d'appui est configurée pour permettre la libération prolongée d'au moins une substance sur une période de temps.

10. Boucle nasale selon la revendication 10, **caractérisée en ce qu'**au moins la face avant de ladite ou de chaque plaquette d'appui est recouverte, ou **en ce que** ladite ou chaque plaquette est imprégnée, de ladite au moins une substance à administrer.

11. Boucle nasale selon la revendication 10 ou 11, **caractérisée en ce que** ladite ou chaque plaquette d'appui est configurée de manière que le taux de distribution de ladite au moins une substance, est basé sur l'étendue de sa surface de contact avec la cloison nasale.

12. Boucle nasale selon l'une quelconque des revendications 10 à 12, **caractérisée en ce que** ladite substance est une composition comprenant :
- entre 35 et 55 % en poids d'une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200°C ; et
- entre 30 et 55 % en poids de progestérone, par rapport au poids total de la composition.

13. Boucle nasale selon l'une quelconque des revendications 10 à 12, **caractérisée en ce que** ladite substance est une composition comprenant :
- une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200 °C ; et
- de la progestérone, dans laquelle le ratio en poids de la progestérone sur la matrice polymérique est compris entre 0,5 et 2, de préférence entre 0,54 et 1,57, et de manière encore plus préférée de 1 ou 1,28.

14. Boucle nasale selon l'une quelconque des revendications 10 à 12, **caractérisée en ce que** ladite substance est une composition comprenant :
- une matrice polymérique comprenant un polymère thermoplastique ayant une dureté Shore A comprise entre 20 et 100 telle que mesurée par un duromètre de type A selon la norme ASTM D2240 et un point de fusion compris entre 40 et 200 °C ; et
- de la progestérone dans laquelle la masse surfacique de la progestérone dans la matrice polymérique est comprise entre 20 et 100 mg/cm², de préférence entre 25 et 80 mg/cm².

15. Boucle nasale selon l'une quelconque des revendications précédentes, **caractérisée en ce que** ladite boucle nasale comporte un ou plusieurs éléments choisis dans le groupe comprenant un accéléromètre, un gyroscope, un capteur de température, un capteur de fréquence cardiaque, un capteur d'humidité, un radar, un dispositif de localisation de cette boucle à proximité d'un abreuvoir ou d'une mangeoire et des combinaisons de ces éléments.
